# EUROPÄISCHE PATENTSCHRIFT

(11) **EP 3 514 189 B1**
(45) Veröffentlichungstag und Bekanntmachung des Hinweises auf die Patenterteilung: **26.07.2023**
(21) Anmeldenummer: 18152300.2
(22) Anmeldetag: 18.01.2018
(51) Int. Cl.: C08G 18/75, C08G 18/79, C08G 18/72, C08G 18/48, C08G 18/10, C08G 18/32, C08G 18/42

(54) **LÖSEMITTEL FREIES MEHRKOMPONENTENSYSTEM**
SOLVENT-FREE MULTICOMPONENT SYSTEM
SYSTÈME MULTICOMPOSANT SANS SOLVANT

(43) Veröffentlichungstag der Anmeldung: 24.07.2019
(73) Patentinhaber: Evonik Operations GmbH, 45128 Essen (DE)
(72) Erfinder: SAJITZ, Melanie, 200030 Shanghai (CN); LOMÖLDER, Rainer, 48153 Münster (DE); NACKE, Christoph, 46514 Schermbeck (DE); HERDA, Silvia, 44623 Herne (DE)
(74) Vertreter: Evonik Patent Association

(56) Entgegenhaltungen:
- EP-A2- 0 275 010
- CN-A- 106 220 817
- DE-A1- 10 241 295
- JP-A- 2003 073 984

## Beschreibung

Die vorliegende Erfindung betrifft Lösemittel freie Mehrkomponentensysteme, die sich insbesondere zur Herstellung gehärteter Massen und insbesondere zur Herstellung von Kunstleder eignen.

Zur Herstellung von Kunstleder sind bisher Verfahren im Markt etabliert, die lösemittelbasierte 1K Systeme verarbeiten. Durch ein Koagulationsverfahren wird eine poröse lederartige Polyurethanschicht erhalten. Das Einkomponentenharz ist eine "Lösung aus Polyurethan und organischem Lösungsmittel", das ein mittels Polyaddition von Diisocyanat und der gleichen molaren Menge eines Polymerdiols zusammen mit einem Kettenverlängerungsmittel hergestelltes, lineares Polymer und ein organisches Lösungsmittel wie beispielsweise DMF (N,N-Dimethylformamid), MEK (Methylethylketon), TOL (Toluol) als Hauptbestandteil umfasst. Ein solches unter Verwenden eines organischen Lösungsmittels hergestelltes Kunstleder erzeugt jedoch Gerüche und ist aufgrund der Flüchtigkeit des toxischen organischen Lösungsmittels stark umstritten. Das Lösungsmittel ist nur Prozeßhilfsmittel und muss abgetrennt und unter energetischem Aufwand zurückgewonnen oder entsorgt werden.

Weiterhin wird ein wässrig basiertes 1K System beschrieben, das bei der Herstellung von Kunstleder auf Basis von Polyurethan zwar keinen Einsatz von organischen Lösemitteln erfordert. Aber dennoch muss das Lösungsmittel Wasser am Ende des Prozesses energiereich mittels Öfen aus dem Material abgeführt werden. Weiterhin weist die Polyurethanschicht, die durch das wässrig basierte Verfahren hergestellt wird, gegenüber dem DMF basierten Prozess Nachteile hinsichtlich der chemischen Beständigkeit und Abriebbeständigkeit auf.

Lösungsmittelfreie 2K Systeme zur Herstellung von Polyurethan basiertem Kunstleder sind bekannt und beschrieben in JP5989518B2, CN102758359B, JP2006316127A, JP4736378B2. Hierbei wird jedoch deutlich, dass es zu Geruchsbildung nach der Herstellung und Farbänderung nach UV Einstrahlung führt, da ein wesentlicher Bestandteil aromatische Isocyanate sind.

CN 106 220 817 A offenbart die lösemittelfreie Herstellung eines lederartigen Materials, bei dem ein aus einem Polyol (A) und einem HDI-Trimer umfassenden polyfunktionellen Isocyanat (B) hergestelltes Prepolymer mit einem Blockierungsmittel (C) umgesetzt und mit einer Verbindung (E) mit mindestens zwei aktiven Wasserstoffatomen zu einem lederartigen Material reagiert werden kann.

Aufgabe war es, ein System zu finden, mit dem verbessertes Kunstleder bezüglich seiner mechanischen Eigenschaften, seiner Anti-Vergilbungsneigung und seiner chemischen Beständigkeit hergestellt werden kann.

Die Aufgabe der Erfindung wird durch das neue Lösemittel freie Mehrkomponentensystem nach Anspruch 1 sowie die weiteren bevorzugten Ausführungsformen gelöst.

Überraschender Weise wurde gefunden, dass insbesondere durch den Einsatz von cycloaliphatischen Diaminen und (cyclo)aliphatischen, homopolymeren Polyisocyanaten mit Isocyanuratgruppen Formulierungen hergestellt werden können, mit denen durch ein 2K Verfahren ohne den Einsatz von Lösungsmitteln Kunstlederfolien hergestellt werden können, die sehr UV beständig, wärmebeständig und geruchsfrei sind.

Durch Zugabe einer cycloaliphatischen Aminkomponente lässt sich die Reaktionsgeschwindigkeit sowie die Härtungsdauer bzw. Härtungstemperatur steuern. Zudem lässt sich durch diese Komponente die Zugfestigkeit beeinflussen, also je nach Konzentration erhöhen oder erniedrigen, sowie auch die Wärmebeständigkeit.

Zudem weisen die resultierenden Folien gute mechanische Eigenschaften auf. Es können pigmentierte oder transparente Folien hergestellt werden, die für den Einsatz bei Schuhen, Handtaschen, Kleidung, Ledermöbeln, Fahrzeuginnenausstattung, etc. verwendet werden können.

Gegenstand der Erfindung ist ein Lösemittel freies Mehrkomponentensystem enthaltend mindestens zwei Komponenten A) und B), wobei
A) mindestens ein aliphatisches, cycloaliphatisches und/oder (cyclo)aliphatisches Diisocyanat a) und mindestens ein (cyclo)aliphatisches Isocyanurat b) im Gew.-Verhältnis von 1 - 20 : 1 umfasst, wobei 5 - 20 mol-% mit mindestens einem Polyol c1) mit mindestens zwei OH-Gruppen im Molekül, bevorzugt einem hydroxylgruppenhaltigen Polyester oder Polyether mit einer OH-Zahl von 20 bis 500 mg KOH/g und einer mittleren Molmasse von 250 bis 6000 g/Mol, umgesetzt sind, bezogen auf die Summe der NCO-Gruppen von a) und b),
   und
B)
   1. 40 - 90 Gew.-% mindestens eines Polyols c2) mit mindestens zwei OH-Gruppen im Molekül ausgewählt aus hydroxylgruppenhaltigen Polyestern oder Polyethern, und
   2. 8 - 35 Gew.-% mindestens eines bevorzugt aliphatischen oder cycloaliphatischen Polyols d) mit mindestens zwei OH-Gruppen im Molekül ausgewählt aus Diolen mit 2 bis 14 Kohlenstoffatomen
      und
   3. 2 - 25 Gew.-% mindestens eines aliphatischen, cycloaliphatischen oder (cyclo)aliphatischen Polyamins e) umfasst,
      bezogen auf die Summe von B) und wobei sich die Komponenten B) 1., 2. und 3. zu 100 Gew.-% addieren ;
      in einem Äquivalenz-Verhältnis der NCO-Gruppen der Komponente A) und den gegenüber den NCO-Gruppen reaktiven Gruppen der Komponenten aus B) von 0.8:1 bis 1.2:1.

Bevorzugter Gegenstand der Erfindung ist ein Lösemittel freies Mehrkomponentensystem enthaltend mindestens zwei Komponenten A) und B), wobei
A) mindestens ein aliphatisches, cycloaliphatisches und/oder (cyclo)aliphatisches Diisocyanat a) und mindestens ein Isocyanurat b) im Gew.-Verhältnis von 5 - 15 : 1 umfasst, wobei 5 - 10 mol-% mit mindestens einem Polyol c1) mit mindestens zwei OH-Gruppen im Molekül umgesetzt sind, bezogen auf die Summe der NCO-Gruppen von a) und b),
   und
B)
   1. 50 - 85 - Gew.-% mindestens eines Polyols c2) mit mindestens zwei OH-Gruppen im Molekül
      und
   2. 11 - 30 Gew.-% mindestens eines Polyols d) mit mindestens zwei OH-Gruppen im Molekül
      und
   3. 4 - 20 Gew.-% mindestens eines aliphatischen, cycloaliphatischen oder (cyclo)aliphatischen Polyamins e) umfasst,
      bezogen auf die Summe von B) und wobei sich die Komponenten B) 1., 2. und 3 zu 100 Gew.-% addieren;
      in einem Äquivalenz-Verhältnis der NCO-Gruppen der Komponente A) und den gegenüber den NCO-Gruppen reaktiven Gruppen der Komponenten aus B) von 0.8:1 bis 1.2:1.

Ganz bevorzugter Gegenstand der Erfindung ist ein Lösemittel freies Mehrkomponentensystem enthaltend mindestens zwei Komponenten A) und B), wobei
A) mindestens ein aliphatisches, cycloaliphatisches und/oder (cyclo)aliphatisches Diisocyanat a) und mindestens ein Isocyanurat b) im Gew.-Verhältnis von 7 - 10 : 1 umfasst, und wobei 6 - 8 mol-% mit mindestens einem Polyol c1) mit mindestens zwei OH-Gruppen im Molekül umgesetzt sind, bezogen auf die Summe der NCO-Gruppen von a) und b),
   und
B)
   1. 60 - 82 Gew.-% mindestens eines Polyols c2) mit mindestens zwei OH-Gruppen im Molekül
      und
   2. 12 - 30 - Gew.-% mindestens eines Polyols d) mit mindestens zwei OH-Gruppen im Molekül
      und
   3. 6 - 15 -Gew.-% mindestens eines aliphatischen, cycloaliphatischen oder (cyclo)aliphatischen Polyamins e) umfasst,
      bezogen auf die Summe von B) und wobei sich die Komponenten B) 1., 2. und 3 zu 100 Gew.-% addieren;
      in einem Äquivalenz-Verhältnis der NCO-Gruppen der Komponente A) und den gegenüber den NCO-Gruppen reaktiven Gruppen der Komponenten aus B) von 0.8:1 bis 1.2:1.

Das erfindungsgemäße Mehrkomponentensystem enthält mindestens die zwei Komponenten A) und B). Somit kann das erfindungsgemäße Mehrkomponentensystem neben den Komponenten A) und B) noch weitere Komponenten aufweisen. Bevorzugt besteht das Mehrkomponentensystem jedoch aus den beiden Komponenten A) und B). Somit kann bevorzugt unter dem erfindungsgemäßen Mehrkomponentensystem ein Kit bestehend aus den beiden separaten Komponenten A) und B) verstanden werden.

### Diisocyanate a)

Die erfindungsgemäß eingesetzten Diisocyanate a) können aus beliebigen aliphatischen, cycloaliphatischen und/oder (cyclo)aliphatischen Diisocyanaten bestehen.

Geeignete aliphatische Diisocyanate besitzen vorteilhafterweise 3 bis 16 Kohlenstoffatome, vorzugsweise 4 bis 12 Kohlenstoffatome, im linearen und/oder verzweigten Alkylenrest.

Geeignete cycloaliphatische oder (cyclo)aliphatische Diisocyanate weisen vorteilhafterweise 4 bis 18 Kohlenstoffatome, vorzugsweise 6 bis 15 Kohlenstoffatome, im Cycloalkylenrest auf.

Unter (cyclo)aliphatischen Diisocyanaten versteht der Fachmann hinlänglich solche, die gleichzeitig cyclisch und aliphatisch gebundene NCO-Gruppen aufweisen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI.

Bevorzugt werden eingesetzt, allein oder in Mischungen: Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexanmethylendiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate,4-Methyl-cyclohexan-1,3-diisocyanat, 2-Butyl-2-ethylpentamethylendiisocyanat, Isophorondiisocyanat, 2-Isocyanatopropylcyclohexyl-isocyanat, Diisocyanatodicyclohexylmethan (H₁₂MDI), 1,4-Diisocyanato-4-methyl-pentan.

Besonders bevorzugt werden Isophorondiisocyanat (IPDI), Hexamethylendiisocyanat (HDI), 4,4`-Diisocyanatodicyclohexylmethan, 2,4`-Diisocyanatodicyclohexylmethan, 2,2'-Diisocyanatodicyclohexylmethan, allein oder in Mischungen der Isomeren (H₁₂MDI), 2-Methylpentandiisocyanat (MPDI), 2,2,4-Trimethylhexamethylendiisocyanat, 2,4,4-Trimethylhexamethylendiisocyanat sowie deren Gemische, (TMDI), Norbornandiisocyanat (NBDI), Lysindiisocyanat (LDI) bzw. L-Lysinethylesterdiisocyanat bzw. 2,6-Diisocyanatoethylhexanoat, allein oder in Mischungen, eingesetzt.

Ganz besonders bevorzugt werden IPDI, HDI, TMDI, LDI und H₁₂MDI eingesetzt, allein oder in Mischungen.

In einer besonders bevorzugten Ausführungsform ist das Diisocyanat a) IPDI und/oder H₁₂MDI und/oder HDI und/oder ein Gemisch von 2,2,4-TMDI und 2,4,4-TMDI.

In einer weiteren besonders bevorzugten Ausführungsform wird als Diisocyanat a) IPDI, 4,4'-Diisocyanatodicyclohexylmethan, 2,4`-Diisocyanatodicyclohexylmethan, 2,2'-Diisocyanatodicyclohexylmethan, allein oder in Mischungen der Isomeren (H₁₂MDI), LDI, allein oder in Mischungen, eingesetzt.

Selbstverständlich können auch Gemische der Diisocyanate a) eingesetzt werden.

### Isocyanurate b)

Als Komponente b) wird mindestens ein Isocyanurat eingesetzt. Es wird ein Isocyanurat ausgewählt aus (cyclo)aliphatischen, homopolymeren Isocyanuraten, allein oder in Mischungen, eingesetzt. Unter (cyclo)aliphatischen, homopolymeren Isocyanuraten sind dabei solche zu verstehen, die aus Diisocyanaten mit gleichzeitig cyclisch und aliphatisch gebundenen NCO-Gruppen hergestellt werden können, wie es z. B. beim Isophoronisocyanurat der Fall ist. Besonders bevorzugt ist das Isocyanurat das Isocyanurat von IPDI.

### Polyole c1) und c2)

Bei den Polyolen c1) und c2) handelt es sich um Verbindungen mit mindestens zwei OH-Gruppen im Molekül. Die Verbindungen c1) und c2) können identisch oder unterschiedlich sein. Bevorzugt sind die Verbindungen c1) und c2) identisch.

Als Komponente c1) werden bevorzugt hydroxylgruppenhaltige Polyester oder Polyether, insbesondere mit einer OH-Zahl von 20 bis 500 mg KOH/g und einer mittleren Molmasse von 250 bis 6000 g/Mol eingesetzt. Als Komponente c2) werden hydroxylgruppenhaltige Polyester oder Polyether, insbesondere mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyether mit einer OH-Zahl von 50 bis 250 mg KOH/g und einem mittleren Molekulargewicht von 500 bis 2500 g/mol eingesetzt. Die Hydroxylzahl (OH-Zahl, OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgt in Tetrahydrofuran als Eluent nach DIN 55672-1.

Als Komponente c1) und c2) werden besonders bevorzugt hydroxylgruppenhaltige Polyether mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyether mit einer OH-Zahl von 50 bis 250 mg KOH/g und einem mittleren Molekulargewicht von 500 bis 2500 g/mol eingesetzt. Die Hydroxylzahl (OH-Zahl, OHZ) wird bestimmt nach DIN 53240-2. Besonders bevorzugt wird Polytetrahydrofuran (Poly-THF) mit einer zahlenmittleren Molmasse von 600 - 1200 g/mol (gemessen nach DIN 55672-1) und einer OH-Zahl von 90 -150 mg KOH/g (gemessen nach DIN 53240-2) eingesetzt.

Als Polyole d) werden Diolemit 2-14 Kohlenstoffatomen eingesetzt. Bevorzugte Diole d) sind ausgewählt aus Ethylenglykol, 1,2- Propandiol, 1,3-Propandiol, Diethylenglykol, Dipropylenglykol, Triethylenglykol, Tetraethylenglykol, 1,2- Butandiol, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Bisphenol A, B, C oder F, Norbornylenglykol, 1,4-Benzyldimethanol, 1,4-Benzyldiethanol, 2,4-Dimethyl-2-ethylhexan-1,3-diol, 1,4- Butylenglykol, 2,3-Butylenglykol, Di-ß-hydroxyethylbutandiol, 1,5-Pentandiol, 1,6-Hexandiol, 1,8-Octandiol, 1,10-Decandiol, 1,12-Dodecandiol, Neopentylglykol, Cyclohexandiol, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(ß-hydroxyethoxy)-phenyl]propan, 2-Methyl-propandiol-1,3, 2-Methylpentandiol-1,5, 2,2,4(2,4,4)-Trimethylhexandiol-1,6, 2,2-Dimethylpropandiol-(1,3), Heptandiol-(1,7), Octadecen-9,10-diol-(1,12), Thiodiglykol, Octadecandiol-(1,18), 2,4-Di-methyl-2-propylheptandiol-(1,3), Polypropylenglykole, Polybutylenglykole, Xylylenglykol oder Hydroxypivalinsäureneopentylglykolester, allein oder in Mischungen.

Besonders bevorzugte Diole d) sind Ethylenglykol, Triethylenglykol,1,4-Butandiol, 1,2-Propandiol, 1,5-Pentandiol, 1,6-Hexandiol, Cyclohexandimethanol, Decandiol, 1,12-Dodecandiol, 2,2,4-Trimethylhexandiol-1,6, 2,4,4-Trimethylhexandiol-1,6, 2,2-Dimethyl-butandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, Trimethylolpropan, 2,2-Dimethylpropandiol-1,3 (Neopentylglykol), Hydroxypivalinsäureneopentylglykolester und cis/trans-1,4-Cyclohexandiol, allein oder in Mischungen.

Ganz besonders bevorzugte Diole d) sind 1,4-Butandiol, 1,5-Pentandiol, 1,6-Hexandiol, 1,12-Dodecandiol, 2,2,4-Trimethylhexandiol-1,6, 2,4,4-Trimethylhexandiol-1,6, 2,2-Dimethyl-butandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, 2,2-Dimethylpropandiol-1,3 (Neopentylglykol) und cis/trans-1,4-Cyclohexandiol, allein oder in Mischungen.

Ganz besonders bevorzugt ist 1,4-Butandiol, und/oder 1,6-Hexandiol.

### Polyamine e)

Das mindestens eine Polyamin e) weist mindestens zwei Aminogruppen auf. Somit können erfindungsgemäß Diamine und Amine mit mehr als zwei Aminogruppen eingesetzt werden.

Entsprechende Polyamine e) sind in der Literatur bekannt. Diese können monomere, oligomere und/oder polymere Verbindungen sein. Monomere und oligomere Verbindungen sind bevorzugt ausgewählt aus der Gruppe bestehend aus Diaminen, Triaminen und Tetraminen. Die Aminogruppe der Polyamine e) kann an einem primären, sekundären oder tertiären Kohlenstoffatom angebunden sein, bevorzugt an einem primären oder sekundären Kohlenstoffatom. Es können auch Mischungen von Diaminen und/oder Aminen mit mehr als zwei Aminogruppen eingesetzt werden. Bevorzugte Polyamine e) weisen primäre und/oder sekundäre Aminogruppen auf. Besonders bevorzugte Polyamine e) weisen ausschließlich primäre und/oder sekundäre Aminogruppen auf. Ganz besonders bevorzugte Polyamine e) weisen ausschließlich primäre Aminogruppen auf.

Als bevorzugte Komponente e) können die folgenden Polyamine allein oder in Mischungen eingesetzt werden:
- aliphatische Amine, bevorzugt Polyalkylenpolyamine, ganz bevorzugt Polyalkylenpolyamine ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin,Triethylentetramin, Pentaethylenhexamin, Trimethylhexamethylendiamin, 2,2,4- Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin
- Oxyalkylenpolyamine, bevorzugt Polyoxypropylendiamin und Polyoxypropylentriamin (z. B., Jeffamine^{®} D-230, Jeffamine^{®} D-400, Jeffamine^{®} T-5000), 1,13-Diamino-4,7,10-trioxatridecan, 4,7-Dioxadecan-1,10-diamin;
- cycloaliphatische und (cyclo)aliphatische Amine, ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin.

Bevorzugt werden die aliphatischen, cycloaliphatischen und (cyclo)aliphatischen Polyamine der o.g. Liste eingesetzt. Weiter bevorzugt werden die aliphatischen, cycloaliphatischen und (cyclo)aliphatischen Diamine der o.g. Liste eingesetzt.

Bevorzugt werden jedoch Diamine eingesetzt. Bevorzugte Diamine e) sind die ausgewählt aus der Liste bestehend aus Isophorondiamin (3,5,5-Trimethyl-3-aminomethyl-cyclohexylamin, IPD), 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren, eine Mischung der Isomeren aus 2,2,4-Trimethylhexamethylendiamin und 2,4,4-Trimethylhexamethylendiamin (TMD), eingesetzt. Es können auch Mischungen dieser Verbindungen eingesetzt werden.

Besonders bevorzugt werden Diamine als Komponente e), allein oder in Mischungen, ausgewählt aus Isophorondiamin (3,5,5-Trimethyl-3-aminomethyl-cyclohexylamin, IPD), und/oder 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren von PACM, eingesetzt.

Bevorzugt wird eine Mischung der Isomeren aus 4,4'-Diaminodicyclohexylmethan, 2,4'-Diaminodicyclohexylmethan, 2,2'-Diaminodicyclohexylmethan (PACM) und/oder IPD eingesetzt.

Das Äquivalenz-Verhältnis der NCO-Gruppen der Komponente A) und den gegenüber den NCO-Gruppen reaktiven Gruppen der Komponente B) beträgt 0.8:1 bis 1.2:1.

Als Hilfsstoffe und Zusatzstoffe können die in der Polyurethanchemie üblichen Zusatzstoffe, wie Verlaufsmittel, insbesondere Polysilicone oder Acrylate, Lichtschutzmittel, insbesondere sterisch gehinderte Amine, oder andere Hilfsmittel, wie sie z. B. in EP 0 669 353 beschrieben werden, und UV- und Thermo-Stabilisatoren, Pigmente Einsatz finden und somit in den Komponenten A) und/oder B) enthalten sein.

Weiterhin können insbesondere in Komponente A) im Herstellprozess übrig gebliebene Katalysatoren enthalten sein. Insbesondere können in A) zur Katalyse der Urethanreaktion eingesetzte Katalysatoren vorhanden sein, die sich auf dem Gebiet der PUR-Technologie bewährt haben, bevorzugt organische Sn(IV)- Sn(II), Zn, Bi-Verbindungen, oder metallorganischen Katalysatoren. Besonders bevorzugt enthält A) und somit auch die erfindungsgemäße Zusammensetzung Dibutylzinndilaurat, Zinnoctoat, Bismuthneodecanoat, oder tertiäre Amine, wie z. B. 1,4-Diazabicylco[2.2.2.]octan.

Bevorzugt weist das erfindungsgemäße Mehrkomponentensystem neben den zuvor aufgeführten optionalen Zusatzstoffen und Katalysatoren keine weiteren Bestandteile auf.

### Allgemeine Verfahrensbeschreibung:

Herstellung der A-Komponente:
Das Prepolymer/die Komponente A kann aus einer Mischung von mindestens einem Diisocyanat a) und mindestens einem (cyclo)aliphatischen Polyisocyanat auf Basis von Isophorondiisocyanat mit Isocyanuratgruppen b) sowie Katalysator (z. B. Dibutylzinndilaurat) und mit einem Polyol c1) in einer Mischapparatur, insbesondere innerhalb von 1 Stunde bei 60 - 100 °C, hergestellt werden. Dem Prepolymer können UV-und Thermostabilisatoren zugesetzt werden. Der Gehalt an freiem NCO der Komponente A wird gemessen gemäß DIN EN ISO 11909.

Herstellung der B-Komponente:
Der mindestens eine Polyol c2) und der mindestens eine Polyol d) können zusammen mit mindestens einem Polyamin e) in einem Mischgerät homogenisiert werden, bevorzugt bei Temperaturen von 20 - 60 °C.

Das Mischen der Komponente A) mit der Komponente B) erfolgt bevorzugt mit Hilfe einer Mischvorrichtung, z. B. eines Statikmischers, eines dynamischen Mischers oder eines 2K Mischkopfes.

### Herstellen gehärteter Massen

Die erfindungsgemäßen Lösemittel freien Mehrkomponentensysteme eignen sich gut zur Herstellung gehärteter Massen. Insbesondere kann mit den erfindungsgemäßen Mehrkomponentensystemen bezüglich seiner mechanischen Eigenschaften, seiner Anti-Vergilbungsneigung und seiner chemischen Beständigkeit verbessertes Kunstleder hergestellt werden.

Gegenstand der vorliegenden Erfindung ist somit ein Verfahren zur Herstellung einer gehärteten Masse, bei dem ein erfindungsgemäßes Mehrkomponentensystem auf ein Substrat oder in eine Form gegeben, gehärtet und nachfolgend ggf. von dem Substrat oder aus der Form gelöst wird.

Besonders gut geeignet ist das erfindungsgemäße Mehrkomponentensystem zur Herstellung von Kunstleder, das durch Auftragen der erfindungsgemäßen Formulierung auf ein Releasesubstrat, Temperierung der aufgetragenen Formulierung auf bevorzugt 60 - 120°C und Ablösen der gehärteten Formulierung hergestellt werden kann. Bevorzugt wird das Auftragen der Masse und Verteilen auf einem Releasesubstrat - das entweder glatt sein oder eine Narbung aufweisen kann - mit einem Schichtausstreicher durchgeführt. Die Schicht kann bevorzugt durch Temperierung auf 60 - 120°C innerhalb von 1 bis 20 Minuten zum Kunstleder gehärtet werden. Gegenstand der vorliegenden Erfindung ist somit auch ein Verfahren zur Herstellung von Kunstleder, bei dem ein erfindungsgemäßes Mehrkomponentensystem auf ein Releasesubstrat aufgebracht, nachfolgend innerhalb von 1 - 20 Minuten bei einer Temperatur von 60 - 120°C gehärtet, und dann vom Releasesubstrat entfernt wird; sowie das über das Verfahren hergestellte Kunstleder.

Die vorliegende Erfindung betrifft auch die Herstellung eines erfindungsgemäßen Lösemittel freien Mehrkomponentensystems.

Bevorzugter Gegenstand ist ein Verfahren zur Herstellung einer erfindungsgemäßen Lösemittel freien Zusammensetzung durch
I. Herstellen einer Komponente A) durch Umsetzung mindestens
   a. eines aliphatischen, cycloaliphatischen und/oder (cyclo)aliphatischen Diisocyanats a) sowie
   b. mindestens eines (cyclo)aliphatischen Isocyanurats b)
      im Gew.-Verhältnis von a) zu b) von 1 - 20 : 1,
   c. mit 5 - 20 mol-% bezogen auf die Summe der NCO-Gruppen von a) und b) mindestens eines Polyol c1) mit mindestens zwei OH-Gruppen zu einer Komponente A), und
II. Herstellen einer Komponente B) durch Mischen von
   1. 40 - 90 Gew.-% mindestens eines Polyols c2) mit mindestens zwei OH-Gruppen im Molekül ausgewählt aus hydroxylgruppenhaltigen Polyestern und Polyethern,
   2. 8 - 35 Gew.-% mindestens eines Polyols d) mit mindestens zwei OH-Gruppen im Molekül ausgewählt aus Diolen mit 2-14 Kohlenstoffatomen
      und
   3. 2 - 25 Gew.-% mindestens eines aliphatischen, cycloaliphatischen oder (cyclo)aliphatischen Polyamins e).

Gegenstand der Erfindung ist auch die Verwendung der erfindungsgemäßen Mehrkomponentensysteme zur Herstellung von Kunstleder.

### Beispiele

### Beispiel 1:

Herstellung der A-Komponente:
Das Prepolymer/Komponente A wird aus einer Mischung von 178 g Methylendicyclohexyldiisocyanat (H₁₂MDI), 20 g (cyclo)aliphatischem, homopolymeren Polyisocyanat mit Isocyanuratgruppen (VESTANAT T 1890), 0,6 g Dibutylzinndilaurat und 46 g eines Polytetramethylenetherglycols (Poly-THF) mit einem mittleren Molekulargewicht von 1000 bei 60 °C innerhalb von 1 Stunde hergestellt. Die UV-und Thermostabilisatoren Irganox 1330, Tinuvin 123 und Uvinul N539T werden dem Prepolymeren beigesetzt (jeweils 1,9 g). Der Gehalt an freiem NCO von 23 % ist in der Komponente A enthalten, gemessen gemäß DIN EN ISO 11909.

Herstellung der B-Komponente:
62 g eines Polytetramethylenetherglycols (Poly-THF) mit einem Molekulargewicht von 1000, 11 g 1,4-Butandiol und 7 g eines Methylenbis(cyclohexylamins) (VESTAMIN PACM) werden in einem Labormischgerät bei Raumtemperatur und mit einer Mischgeschwindigkeit von 800 rpm homogenisiert.

In den Beispielen 2-8 und Vergleich 1-2 wird Kunstleder wie im Beispiel 1 unter Verwendung der in Tabelle A aufgeführten Bestandteile hergestellt. Verfahrensweise wie in Beispiel 1 angegeben.

### Herstellung Folie

Das Mischen der Komponente A mit der Komponente B erfolgt im Äquivalenz-Verhältnis der NCO-Gruppen der Komponente A) und den gegenüber den NCO-Gruppen reaktiven Gruppen der Komponenten aus B) von 1:1.

Das Auftragen der Kunstledermasse geschieht auf einem Releasesubstrat mit einem Schichtausstreicher und wird bei 80°C gehärtet. Man erhält eine Folie, wie in den Beispielen dargestellt mit den beschriebenen Eigenschaften der Tabellen 1 - 3.

**Tabelle A Zusammensetzung der Komponenten A und B für die Herstellung der Folien**

| Bestandteile (Gew.-%) | | | Beispiel 1 | Beispiel 2 | Beispiel 3 | Beispiel 4 | Beispiel 5 | Beispiel 6 | Beispiel 7 | Beispiel 8 | Vgl.-Bsp. 1 | Vgl.-Bsp. 2 |
|---|---|---|---|---|---|---|---|---|---|---|---|---|
| A | Methylendicyclohexyldiisocyanat (H12MDI) | Evonik | 36,7 | 35,2 | 31,6 | - | - | - | - | - | 38,0 | - |
| | Isophorondiisocyanat | Evonik | - | - | - | 37,2 | 33,7 | 36,2 | 31,0 | 31,9 | - | - |
| | Diphenylmethan-4,4'-diisocyanat (MDI) | Covestro | - | - | - | - | - | - | - | - | - | 35,3 |
| | (cyclo)aliphatisches, homopolymeres Polyisocyanat mit Ispcyanuratgruppen | Evonik, VESTANAT T1890/100 | 4,1 | 3,9 | 3,5 | 4,1 | 3,7 | 4,0 | 3,5 | 3,5 | - | - |
| | Poly-THF (Molmasse 1000g/mol) | BASF | 9,6 | 11,1 | 14,6 | 9,0 | - | - | 14,7 | 15,0 | 12,1 | 16,5 |
| | Oxyester T 1136 (Molmasse 1000g/mol) | Evonik | - | - | - | - | 11,4 | - | - | - | - | - |
| | Lupranol 1100 (Molmasse 1000g/mol) | BASF | - | - | - | - | - | 9,9 | - | - | - | - |
| | DBTL | TIB Chemicals | 0,1 | 0,1 | 0,1 | 0,1 | 0,1 | 0,1 | 0,1 | 0,1 | 0,1 | 0,1 |
| | Uvinol N539T | BASF | 0,4 | 0,4 | 0,4 | 0,4 | 0,4 | 0,4 | 0,4 | - | 0,4 | 0,4 |
| | Tinuvin 123 | BASF | 0,4 | 0,4 | 0,4 | 0,4 | 0,4 | 0,4 | 0,4 | - | 0,4 | 0,4 |
| | Irganox 1330 | BASF | 0,4 | 0,4 | 0,4 | 0,4 | 0,4 | 0,4 | 0,4 | - | 0,4 | 0,4 |
| B | Poly-THF (Molmasse 1000g/mol) | BASF | 37,6 | 41,0 | 30,5 | 35,5 | - | - | 27,2 | 27,1 | 41,0 | 30,3 |
| | Oxyester T 1136 (Molmasse 1000g/mol) | Evonik | - | - | - | - | 38,7 | - | - | - | - | - |
| | Lupranol 1100 (Molmasse 1000g/mol) | BASF | - | - | - | - | - | 35,5 | - | - | - | - |
| | 1,4-Butandiol | BASF | 6,7 | 7,5 | 4,5 | 8,9 | 7,2 | 9,1 | 8,4 | 8,4 | 7,6 | 6,7 |
| | Methylenbis(cyclohexylamin) PACM V.. | Evonik | 4,0 | - | 4,0 | - | - | - | - | - | - | - |
| | Isophorondiamin | Evonik | - | - | - | 4,0 | 4,0 | 4,0 | 4,0 | 4,0 | - | - |
| | Pigmentpaste mit Kronos 2064 | KRONOS TITAN GmbH | - | - | 10,0 | - | - | - | 10,0 | 10,0 | - | 10,0 |
| Gesamt | | | 100 | | | | | | | | | |

### Tabelle 1

### Messung der Eigenschaften

Die Vergilbungsbeständigkeit wurde bevorzugt durch Bewertung der Farbänderung mit einem UV Gerät (UVA+UVB-Strahlung) für 7 Tage gemessen (nach ASTM E313).

### Bewertung der Vergilbung

| | Beispiel 3 | Beispiel 7 | Beispiel 8 | Vgl.-Bsp. 2 |
|---|---|---|---|---|
| Beginn der Bewitterung | 4,2 | 2,6 | 2,8 | 4,9 |
| Bewertung nach 1 Tag | 4,7 | 2,9 | 3,0 | 11,9 |
| Bewertung nach 2 Tage | 5,1 | 3,1 | 3,2 | 13,7 |
| Bewertung nach 3 Tage | / | 3,4 | / | 16,9 |
| Bewertung nach 7 Tage | 6,2 | 4,1 | 3,4 | 24,0 |

### Tabelle 2

### Messung der Eigenschaften

Die Vergilbungsbeständigkeit wurde bevorzugt durch Bewertung der Farbänderung von einem geschulten Panelteam nach 7 Tagen Lagerung optisch bewertet.

### Bewertung der Vergilbung

| | Beispiel 3 | Beispiel 7 | Beispiel 8 | Vgl.-Bsp. 2 |
|---|---|---|---|---|
| 1. Deutliche Farbveränderung | 3-4 | 3 | 3-4 | 1 |
| 2. Visuell erkennbare Farbveränderung | | | | |
| 3. Geringe Farbveränderung | | | | |
| 4. keine Farbveränderung | | | | |

### Tabelle 3

### Messung der Eigenschaften

Die Geruchsbildung von dem hergestellten Kunstleder wurde unter Verwendung der unten aufgelisteten Beispiele getestet und entsprechend der Standardtabelle bewertet.

Die Proben wurden in den Abmessungen 60x60xSD (mm, SD = Schichtdicke) 7 Tage bei Raumtemperatur in geschlossenen 100ml Glasgefäßen gelagert.

### Bewertung der Geruchsbildung

| | Beispiel 1 | Beispiel 3 | Beispiel 7 | Beispiel 8 | Vgl.-Bsp. 1 | Vgl.-Bsp. 2 |
|---|---|---|---|---|---|---|
| 1. Reizender und starker Geruch | 5 | 5-6 | 4 | 6 | 6 | 2 |
| 2. Starker Geruch | | | | | | |
| 3. Schwacher, jedoch leicht erkennbarer Geruch | | | | | | |
| 4. Erkennbarer, jedoch vernachlässigbarer Geruch | | | | | | |
| 5. Nahezu nicht erkennbarer Geruch | | | | | | |
| 6. Kein Geruch | | | | | | |

**Tabelle Prüfung B**

| | | Beispiel 1 | Beispiel 2 | Beispiel 3 | Beispiel 4 | Beispiel 5 | Beispiel 7 | Beispiel 8 | Vgl.-Bsp. 1 |
|---|---|---|---|---|---|---|---|---|---|
| Schichtdicke | µm | 229 | 190 | 241 | 74 | *184* | 154 | *206* | 148 |
| Zugfestigkeit | N/mm | 24,2 | 22,6 | 16,3 | 19,4 | 11,4 | 22,6 | 7,3 | 18,0 |
| Dehnung | % | 355 | 349 | 324 | 339 | 335 | 429 | 378 | 383 |
| E-Modulus 100% | MPa | 10,3 | 10,3 | 9,0 | 8,2 | 6,6 | 6,7 | 3,4 | 9,6 |
| E-Modulus 200% | MPa | 15,0 | 14,5 | 12,0 | 11,7 | 8,4 | 10,5 | 4,8 | 12,0 |
| E-Modulus 300% | MPa | 20,4 | 19,9 | 15,0 | 17,2 | 10,7 | 15,2 | 6,2 | 15,1 |
| Weiterreißfestigkeit | N/mm | 118,6 | 143,5 | 119,1 | 125,7 | 104,1 | 88,1 | 63,7 | 139,3 |

### Meßmethoden:

| | |
|---|---|
| Schichtdicke | DIN EN ISO 2360 |
| Zugfestigkeit | DIN EN ISO 527 |
| Dehnung | DIN EN ISO 527 |
| E-Modulus 100 % | DIN EN ISO 527 |
| E-Modulus 200 % | DIN EN ISO 527 |
| E-Modulus 300 % | DIN EN ISO 527 |
| Weiterreißfestigkeit | DIN 53363 |

Ergebnis: Durch die Beispiele wird eindeutig gezeigt, dass die Kunstlederfolien, die aus der Erfindung resultieren, deutliche Vorteile gegenüber dem Stand der Technik, also den Folien mit aromatischen Polyurethanverbindungen, aufweisen und viel stabiler gegenüber UV Licht sind.

Die Folien des Vergleichsbeispiels Nr. 2 vergilben schnell und stark, wohingegen die Folien der Beispiele 3, 7 und 8 kaum bis gar keine Änderung des Farbwertes zeigen.

### Tabelle 3:

Die Geruchsbildung von dem hergestellten Kunstleder wurde unter Verwendung der unten aufgelisteten Beispielen getestet und entsprechend der Standardtabelle (Noten 1 bis 6, wobei 1 kein Geruch und 6 sehr starker Geruch bedeutet) durch geschulte Panelteilnehmer bewertet.

Die Proben wurden nach der Herstellung in geschlossenen 100ml Glasgefäßen mit der Abmessung 60x60xSD (mm) 7 Tage bei Raumtemperatur gelagert, bevor die Bewertung stattfand.

Das Ergebnis der sensorischen Geruchsprüfung (Panelstudie) zeigt, dass die durch die Erfindung hergestellten Kunstlederfolien hinsichtlich Geruchsbildung eindeutig Vorteile zeigen. Das auf dem aromatischen System basierte Vergleichsbeispiel 2 weist einen starken Geruch auf, was für die Art der Polyurethanfolien bekannt ist. Die Folien, die nach der Erfindung hergestellt wurden, weisen sehr geringen bis gar keinen Geruch auf.

### Tabelle Prüfung B:

Die Tabelle "Prüfung" zeigt, dass die Folien, die nach der Erfindung hergestellt wurden, gute mechanische Eigenschaften aufweisen.

## Patentansprüche

1. Lösemittel freies Mehrkomponentensystem enthaltend mindestens zwei Komponenten A) und B), wobei
A) mindestens ein aliphatisches, cycloaliphatisches und/oder (cyclo)aliphatisches Diisocyanat a) und
mindestens ein (cyclo)aliphatisches Isocyanurat b)
im Gew.-Verhältnis von 1 - 20 : 1 umfasst,
wobei 5 - 20 mol-% mit mindestens einem Polyol c1) mit mindestens zwei OH-Gruppen im Molekül umgesetzt sind, bezogen auf die Summe der NCO-Gruppen von a) und b),
und
B)
1. 40 - 90 Gew.-% mindestens eines Polyols c2) mit mindestens zwei OH-Gruppen im Molekül ausgewählt aus hydroxylgruppenhaltigen Polyestern und Polyethern,
2. 8 - 35 Gew.-% mindestens eines Polyols d) mit mindestens zwei OH-Gruppen im Molekül ausgewählt aus Diolen mit 2-14 Kohlenstoffatomen
und
3. 2 - 25 Gew.-% mindestens eines aliphatischen, cycloaliphatischen oder (cyclo)aliphatischen Polyamins e) umfasst,
bezogen auf die Summe von B) und wobei sich die Komponenten B) 1., 2. und 3. zu 100 Gew.-% addieren;
in einem Äquivalenz-Verhältnis der NCO-Gruppen der Komponente A) und den gegenüber den NCO-Gruppen reaktiven Gruppen der Komponenten aus B) von 0.8:1 bis 1.2:1.

2. Lösemittel freies Mehrkomponentensystem nach Anspruch 1, wobei das mindestens eine Diisocyanat a) ausgewählt aus
- Isophorondiisocyanat (IPDI),
- Hexamethylendiisocyanat (HDI),
- 4,4'-Diisocyanatodicyclohexylmethan, 2,4'-Diisocyanatodicyclohexylmethan, 2,2'-Diisocyanatodicyclohexylmethan, allein oder in Mischung der Isomeren (H₁₂MDI),
- 2-Methylpentandiisocyanat (MPDI),
- 2,2,4-Trimethylhexamethylendiisocyanat, 2,4,4-Trimethylhexamethylendiisocyanat sowie deren Gemische (TMDI),
- Norbornandiisocyanat (NBDI),
- Lysindiisocyanat (LDI) und
deren Mischungen ist.

3. Lösemittel freies Mehrkomponentensystem nach mindestens einem der vorherigen Ansprüche, wobei das mindestens eine Diisocyanat a) ausgewählt ist aus
- IPDI,
- 4,4'-Diisocyanatodicyclohexylmethan, 2,4'-Diisocyanatodicyclohexylmethan, 2,2'-Diisocyanatodicyclohexylmethan, allein oder in Mischungen der Isomeren (H₁₂MDI), und
- LDI.

4. Lösemittel freies Mehrkomponentensystem nach mindestens einem der vorherigen Ansprüche, wobei das mindestens eine Isocyanurat b) ausgewählt ist aus (cyclo)aliphatischen, homopolymeren Isocyanuraten und Hexamethylenisocyanurat.

5. Lösemittel freies Mehrkomponentensystem nach mindestens einem der vorherigen Ansprüche, wobei die Komponenten c1) und c2) hydroxylgruppenhaltige Polyester oder Polyether mit einer OH-Zahl von 20 bis 500 mg KOH/g und einer mittleren Molmasse von 250 bis 6000 g/Mol sind.

6. Lösemittel freies Mehrkomponentensystem nach mindestens einem der vorherigen Ansprüche, wobei die Komponenten c1) und c2) Polytetrahydrofuran mit einer zahlenmittleren Molmasse von 600 - 1200 g/mol und einer OH-Zahl von 90 -150 mg KOH/g sind.

7. Lösemittel freies Mehrkomponentensystem nach mindestens einem der vorherigen Ansprüche, wobei der mindestens eine Polyol d) ausgewählt ist aus Ethylenglykol, 1,2- Propandiol, 1,3-Propandiol, Diethylenglykol, Dipropylenglykol, Triethylenglykol, Tetraethylenglykol, 1,2- Butandiol, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Bisphenol A, B, C oder F, Norbornylenglykol, 1,4-Benzyldimethanol, 1,4-Benzyldiethanol, 2,4-Dimethyl-2-ethylhexan-1,3-diol, 1,4-Butylenglykol, 2,3-Butylenglykol, Di-ß-hydroxyethylbutandiol, 1,5-Pentandiol, 1,6-Hexandiol, 1,8-Octandiol, 1,10-Decandiol, 1,12-Dodecandiol, Neopentylglykol, Cyclohexandiol, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(β-hydroxyethoxy)-phenyl]propan, 2-Methyl-propandiol-1,3, 2-Methylpentandiol-1,5, 2,2,4(2,4,4)-Trimethylhexandiol-1,6, 2,2-Dimethylpropandiol-(1,3), Heptandiol-(1,7), Octa-decen-9,10-diol-(1,12), Thiodiglykol, Octadecandiol-(1,18), 2,4-Di-methyl-2-propylheptandiol-(1,3), Polypropylenglykole, Polybutylenglykole, Xylylenglykol und Hydroxypivalinsäureneopentylglykolester.

8. Lösemittel freies Mehrkomponentensystem nach mindestens einem der vorherigen Ansprüche, wobei der mindestens eine Polyol d) ausgewählt aus 1,4-Butandiol, 1,5-Pentandiol, 1,6-Hexandiol, 1,12-Dodecandiol, 2,2,4-Trimethylhexandiol-1,6, 2,4,4-Trimethylhexandiol-1,6, 2,2-Dimethyl-butandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3, 3-Methylpentandiol-1,5, 2-Methyl-pentandiol-1,5, 2,2-Dimethylpropandiol-1,3 (Neopentylglykol) und cis/trans-1,4-Cyclohexandiol ist.

9. Lösemittel freies Mehrkomponentensystem nach mindestens einem der vorherigen Ansprüche, wobei der mindestens eine Polyol d) 1,4-Butandiol und/oder 1,6-Hexandiol ist.

10. Lösemittel freies Mehrkomponentensystem nach mindestens einem der vorherigen Ansprüche, wobei das mindestens eine Polyamin e) ausgewählt ist aus
- aliphatischen Aminen, bevorzugt Polyalkylenpolyaminen, ganz bevorzugt Polyalkylenpolyaminen ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin,Triethylentetramin, Pentaethylenhexamin, Trimethylhexamethylendiamin, 2,2,4- Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin
- Oxyalkylenpolyaminen, insbesondere ausgewählt aus Polyoxypropylendiamin, Polyoxypropylentriamin, 1,13-Diamino-4,7,10-trioxatridecan und 4,7-Dioxadecan-1,10-diamin;
- cycloaliphatischen und (cyclo)aliphatischen Amine, insbesondere ausgewählt aus Isophorondiamin , 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan und 3-(Cyclohexylamino)propylamin.

11. Lösemittel freies Mehrkomponentensystem nach mindestens einem der vorherigen Ansprüche, wobei das mindestens eine Polyamin e) ein Diamin ausgewählt aus Isophorondiamin, 4,4'-Diaminodicyclohexylmethan, 2,4'-Diaminodicyclohexylmethan und 2,2'-Diaminodicyclohexylmethan ist.

12. Lösemittel freies Mehrkomponentensystem nach mindestens einem der vorherigen Ansprüche, wobei das Polyamin e)
a. einer Mischung der Isomeren aus 4,4'-Diaminodicyclohexylmethan, 2,4'-Diaminodicyclohexylmethan, 2,2'-Diaminodicyclohexylmethan (PACM) und/oder
b. IPD ist.

13. Verfahren zu Herstellung eines Lösemittel freien Mehrkomponentensystems nach einem der vorhergehenden Ansprüche durch
I. Herstellen einer Komponente A) durch Umsetzung mindestens
a. eines aliphatischen, cycloaliphatischen und/oder (cyclo)aliphatischen Diisocyanats a) sowie
b. mindestens eines (cyclo)aliphatischen Isocyanurats b) im Gew.-Verhältnis von a) zu b) von 1 - 20 : 1,
c. mit 5 - 20 mol-% bezogen auf die Summe der NCO-Gruppen von a) und b) mindestens eines Polyol c1) mit mindestens zwei OH-Gruppen zu einer Komponente A), und
II. Herstellen einer Komponente B) durch Mischen von
1. 40 - 90 Gew.-% mindestens eines Polyols c2) mit mindestens zwei OH-Gruppen im Molekül ausgewählt aus hydroxylgruppenhaltigen Polyestern und Polyethern,
2. 8 - 35 Gew.-% mindestens eines Polyols d) mit mindestens zwei OH-Gruppen im Molekül ausgewählt aus Diolen mit 2-14 Kohlenstoffatomen und
3. 2 - 25 Gew.-% mindestens eines aliphatischen, cycloaliphatischen oder (cyclo)aliphatischen Polyamins e).

14. Verwendung eines Mehrkomponentensystems nach einem der Ansprüche 1-12 zur Herstellung von Kunstleder.

15. Verfahren zur Herstellung einer gehärteten Masse, bei dem ein Mehrkomponentensystem nach einem der Ansprüche 1-12 auf ein Substrat oder in eine Form gegeben, gehärtet und nachfolgend ggf. von dem Substrat oder aus der Form gelöst wird.

## Claims

1. Solvent-free multicomponent system containing at least two components A) and B), wherein
A) comprises at least one aliphatic, cycloaliphatic and/or (cyclo)aliphatic diisocyanate a) and
at least one (cyclo)aliphatic isocyanurate b) in a weight ratio of 1- 20 : 1,
wherein 5-20 mol% have been reacted with at least one polyol c1) having at least two OH groups in the molecule based on the sum of the NCO groups of a) and b),
and
B) comprises 1. 40-90% by weight of at least one polyol c2) having at least two OH groups in the molecule selected from hydroxyl-containing polyesters and polyethers,
2. 8-35% by weight of at least one polyol d) having at least two OH groups in the molecule selected from diols having 2-14 carbon atoms
and
3. 2-25% by weight of at least one aliphatic, cycloaliphatic or (cyclo)aliphatic polyamine e), based on the sum of B) and wherein the components B) 1., 2. and 3. add up to 100% by weight;
in an equivalence ratio of the NCO groups of the component A) to the NCO-reactive groups of the components from B) of 0.8:1 to 1.2:1.

2. Solvent-free multicomponent system according to Claim 1, wherein the at least one diisocyanate a) is selected from
- isophorone diisocyanate (IPDI),
- hexamethylene diisocyanate (HDI),
- 4,4'-diisocyanatodicyclohexylmethane, 2,4'-diisocyanatodicyclohexylmethane, 2,2'-diisocyanatodicyclohexylmethane, alone or in a mixture of the isomers (H₁₂MDI),
- 2-methylpentane diisocyanate (MPDI),
- 2,2,4-trimethylhexamethylene diisocyanate, 2,4,4-trimethylhexamethylene diisocyanate and mixtures thereof (TMDI),
- norbornane diisocyanate (NBDI),
- lysine diisocyanate (LDI) and
mixtures thereof.

3. Solvent-free multicomponent system according to at least one of the preceding claims, wherein the at least one diisocyanate a) is selected from
- IPDI,
- 4,4'-diisocyanatodicyclohexylmethane, 2,4'-diisocyanatodicyclohexylmethane, 2,2'-diisocyanatodicyclohexylmethane, alone or in mixtures of the isomers (H₁₂MDI), and
- LDI.

4. Solvent-free multicomponent system according to at least one of the preceding claims, wherein the at least one isocyanurate b) is selected from (cyclo)aliphatic, homopolymeric isocyanurates and hexamethylene isocyanurate.

5. Solvent-free multicomponent system according to at least one of the preceding claims, wherein the components c1) and c2) are hydroxyl-containing polyesters or polyethers having an OH number of 20 to 500 mg KOH/g and an average molar mass of 250 to 6000 g/mol.

6. Solvent-free multicomponent system according to at least one of the preceding claims, wherein the components c1) and c2) are polytetrahydrofuran having a number-average molar mass of 600-1200 g/mol and an OH number of 90-150 mg KOH/g.

7. Solvent-free multicomponent system according to at least one of the preceding claims, wherein the at least one polyol d) is selected from ethylene glycol, propane-1,2-diol, propane-1,3-diol, diethylene glycol, dipropylene glycol, triethylene glycol, tetraethylene glycol, butane-1,2-diol, butane-1,4-diol, butylethylpropane-1,3-diol, methylpropane-1,3-diol, pentane-1,5-diol, bis(1,4-hydroxymethyl)cyclohexane (cyclohexanedimethanol), glycerol, hexanediol, neopentyl glycol, trimethylolethane, trimethylolpropane, bisphenol A, B, C or F, norbornylene glycol, 1,4-benzyldimethanol, 1,4-benzyldiethanol, 2,4-dimethyl-2-ethylhexane-1,3-diol, 1,4-butylene glycol, 2,3-butylene glycol, di-β-hydroxyethylbutanediol, pentane-1,5-diol, hexane-1,6-diol, octane-1,8-diol, decane-1,10-diol, dodecane-1,12-diol, neopentyl glycol, cyclohexanediol, 3(4), 8(9)-bis (hydroxymethyl)tricyclo[5.2.1.0^{2,6}]decane (dicidol), 2,2-bis(4-hydroxycyclohexyl)propane, 2,2-bis[4-(β-hydroxyethoxy)phenyl]propane, 2-methylpropane-1,3-diol, 2-methylpentane-1,5-diol, 2,2,4(2,4,4)-trimethylhexane-1,6-diol, 2,2-dimethylpropane-1,3-diol, heptane-1,7-diol, 9,10-octadecene-1,12-diol, thiodiglycol, octadecane-1,18-diol, 2,4-dimethyl-2-propylheptane-1,3-diol, polypropylene glycols, polybutylene glycols, xylylene glycol and neopentyl glycol hydroxypivalate.

8. Solvent-free multicomponent system according to at least one of the preceding claims, wherein the at least one polyol d) is selected from butane-1,4-diol, pentane-1,5-diol, hexane-1,6-diol, dodecane-1,12-diol, 2,2,4-trimethylhexane-1,6-diol, 2,4,4-trimethylhexane-1,6-diol, 2,2-dimethylbutane-1,3-diol, 2-methylpentane-2,4-diol, 3-methylpentane-2,4-diol, 2,2,4-trimethylpentane-1,3-diol, 2-ethylhexane-1,3-diol, 2,2-dimethylhexane-1,3-diol, 3-methylpentane-1,5-diol, 2-methylpentane-1,5-diol, 2,2-dimethylpropane-1,3-diol (neopentyl glycol) and cis/trans-cyclohexane-1,4-diol.

9. Solvent-free multicomponent system according to at least one of the preceding claims, wherein the at least one polyol d) is butane-1,4-diol and/or hexane-1,6-diol.

10. Solvent-free multicomponent system according to at least one of the preceding claims, wherein the at least one polyamine e) is selected from
- aliphatic amines, preferably polyalkylene polyamines, very preferably polyalkylene polyamines selected from ethylene-1,2-diamine, propylene-1,2-diamine, propylene-1,3-diamine, butylene-1,2-diamine, butylene-1,3-diamine, butylene-1,4-diamine, 2-(ethylamino)ethylamine, 3-(methylamino)propylamine, diethylenetriamine, triethylenetetramine, pentaethylenehexamine, trimethylhexamethylenediamine, 2,2,4-trimethylhexamethylenediamine, 2,4,4-trimethylhexamethylenediamine, 2-methylpentanediamine, hexamethylenediamine, N-(2-aminoethyl)ethane-1,2-diamine, N-(3-aminopropyl)propane-1,3-diamine, N,N"-1,2-ethanediylbis(1,3-propanediamine), dipropylenetriamine;
- oxyalkylene polyamines, in particular selected from polyoxypropylenediamine, polyoxypropylenetriamine, 1,13-diamino-4,7,10-trioxatridecane and 4,7-dioxadecane-1,10-diamine;
- cycloaliphatic and (cyclo)aliphatic amines, in particular selected from isophoronediamine, 4,4'-diaminodicyclohexylmethane, 2,4'-diaminodicyclohexylmethane and 2,2'-diaminodicyclohexylmethane, alone or in mixtures of the isomers, 3,3'-dimethyl-4,4'-diaminodicyclohexylmethane, N-cyclohexyl-1,3-propanediamine, 1,2-diaminocyclohexane and 3-(cyclohexylamino)propylamine.

11. Solvent-free multicomponent system according to at least one of the preceding claims, wherein the at least one polyamine e) is a diamine selected from isophoronediamine, 4,4'-diaminodicyclohexylmethane, 2,4'-diaminodicyclohexylmethane and 2,2'-diaminodicyclohexylmethane.

12. Solvent-free multicomponent system according to at least one of the preceding claims, wherein the polyamine e) is
a. a mixture of the isomers of 4,4'-diaminodicyclohexylmethane, 2,4'-diaminodicyclohexylmethane, 2,2'-diaminodicyclohexylmethane (PACM) and/or
b. IPD.

13. Process for producing a solvent-free multicomponent system according to any of the preceding claims by
I. producing a component A) by reaction of at least
a. one aliphatic, cycloaliphatic and/or (cyclo)aliphatic diisocyanate a) and
b. at least one (cyclo)aliphatic isocyanurate b) in a weight ratio of a) to b) of 1-20 : 1,
c. with 5-20 mol% based on the sum of the NCO groups of a) and b) of at least one polyol c1) having at least two OH groups to one component A) and
II. producing a component B) by mixing
1. 40-90% by weight of at least one polyol c2) having at least two OH groups in the molecule selected from hydroxyl-containing polyesters and polyethers,
2. 8-35% by weight of at least one polyol d) having at least two OH groups in the molecule selected from diols having 2-14 carbon atoms and
3. 2-25% by weight of at least one aliphatic, cycloaliphatic or (cyclo)aliphatic polyamine e).

14. Use of a multicomponent system according to any of Claims 1-12 for producing artificial leather.

15. Process for producing a cured composition in which a multicomponent system according to any of Claims 1-12 is introduced onto a substrate or into a mould, cured and then optionally detached from the substrate or from the mould.

## Revendications

1. Système sans solvant à plusieurs composants contenant au moins deux composants A) et B),
A) comprenant au moins un diisocyanate aliphatique, cycloaliphatique et/ou (cyclo)aliphatique a) et au moins un isocyanurate (cyclo)aliphatique b) en un rapport en poids de 1 à 20 : 1,
5 à 20 % en moles étant mis à réagir avec au moins un polyol c1) comportant au moins deux groupes OH dans la molécule, par rapport à la somme des groupes NCO de a) et b), et
B) comprenant
1. 40 à 90 % en poids d'au moins un polyol c2) comportant au moins deux groupes OH dans la molécule choisis parmi des polyesters et des polyéthers contenant des groupes hydroxyle,
2. 8 à 35 % en poids d'au moins un polyol d) comportant au moins deux groupes OH dans la molécule choisis parmi des diols comportant 2 à 14 atomes de carbone
et
3. 2 à 25 % en poids d'au moins une polyamine e) aliphatique, cycloaliphatique ou (cyclo) aliphatique,
par rapport à la somme de B) et les composants B) 1., 2. et 3. totalisant 100 % en poids ;
en un rapport d'équivalence des groupes NCO du composant A) et des groupes des composants de B) réactifs envers les groupes NCO de 0,8 : 1 à 1,2 : 1.

2. Système sans solvant à plusieurs composants selon la revendication 1, l'au moins un diisocyanate a) étant choisi parmi
- diisocyanate d'isophorone (IPDI),
- diisocyanate d'hexaméthylène (HDI),
- 4,4'-diisocyanatodicyclohexylméthane, 2,4'-diisocyanatodicyclohexylméthane, 2,2'-diisocyanatodicyclohexylméthane, seul ou en mélange d'isomères (H₁₂MDI),
- diisocyanate de 2-méthylpentane (MPDI),
- diisocyanate de 2,2,4-triméthylhexaméthylène, diisocyanate de 2,4,4-triméthylhexaméthylène ainsi que leurs mélanges (TMDI),
- diisocyanate de norbornane (NBDI),
- diisocyanate de lysine (LDI) et
leurs mélanges.

3. Système sans solvant à plusieurs composants selon l'une quelconque des revendications précédentes, l'au moins un diisocyanate a) étant choisi parmi
- IPDI,
- 4,4'-diisocyanatodicyclohexylméthane, 2,4'-diisocyanatodicyclohexylméthane, 2,2'-diisocyanatodicyclohexylméthane, seul ou en mélange d'isomères (H₁₂MDI), et
- LDI.

4. Système sans solvant à plusieurs composants selon l'une quelconque des revendications précédentes, l'au moins un isocyanurate b) étant choisi parmi des isocyanurates (cyclo)aliphatiques, homopolymériques et l'isocyanurate d'hexaméthylène.

5. Système sans solvant à plusieurs composants selon l'une quelconque des revendications précédentes, les composants c1) et c2) étant des polyesters ou polyéthers contenant des groupes hydroxyle dotés d'un indice d'OH de 20 à 500 mg de KOH/g et d'une masse molaire moyenne de 250 à 6 000 g/mole.

6. Système sans solvant à plusieurs composants selon l'une quelconque des revendications précédentes, les composants c1) et c2) étant un polytétrahydrofuranne doté d'une masse molaire moyenne en nombre de 600 à 1 200 g/mole et d'un indice d'OH de 90 à 150 mg de KOH/g.

7. Système sans solvant à plusieurs composants selon l'une quelconque des revendications précédentes, l'au moins un polyol d) étant choisi parmi éthylène glycol, 1,2-propanediol, 1,3-propanediol, diéthylène glycol, dipropylène glycol, triéthylène glycol, tétraéthylène glycol, 1,2-butanediol, 1,4-butanediol, 1,3-butyléthylpropanediol, 1,3-méthylpropanediol, 1,5-pentanediol, bis-(1,4-hydroxyméthyl)cyclohexane (cyclohexanediméthanol), glycérol, hexanediol, néopentylglycol, triméthyloléthane, triméthylolpropane, bisphénol A, B, C ou F, norbornylèneglycol, 1,4-benzyldiméthanol, 1,4-benzyldiéthanol, 2,4-diméthyl-2-éthylhexane-1,3-diol, 1,4-butylèneglycol, 2,3-butylèneglycol, di-β-hydroxyéthylbutanediol, 1,5-pentanediol, 1,6-hexanediol, 1,8-octanediol, 1,10-décanediol, 1,12-dodécanediol, néopentylglycol, cyclohexanediol, 3(4),8(9)-bis(hydroxyméthyl)-tricyclo[5.2.1.0^{2,6}]décane (dicidol), 2,2-bis-(4-hydroxycyclohexyl)propane, 2,2-bis-[4-(β-hydroxyéthoxy)-phényl]propane, 2-méthyl-propanediol-1,3, 2-méthylpentanediol-1,5, 2,2,4(2,4,4)-triméthylhexanediol-1,6, 2,2-diméthylpropanediol-(1,3), heptanediol-(1,7), octadécène-9,10-diol-(1,12), thiodiglycol, octadécanediol-(1,18), 2,4-di-méthyl-2-propylheptanediol-(1,3), polypropylèneglycols, polybutylèneglycols, xylylèneglycol et esters de néopentylglycol d'acide hydroxypivalique.

8. Système sans solvant à plusieurs composants selon l'une quelconque des revendications précédentes, l'au moins un polyol d) étant choisi parmi 1,4-butanediol, 1,5-pentanediol, 1,6-hexanediol, 1,12-dodécanediol, 2,2,4-triméthylhexanediol-1,6, 2,4,4-triméthylhexanediol-1,6, 2,2-diméthyl-butanediol-1,3, 2-méthyl-pentanediol-2,4, 3-méthyl-pentanediol-2,4, 2,2,4-triméthyl-pentanediol-1,3, 2-éthylhexanediol-1,3, 2,2-diméthylhexanediol-1,3, 3-méthylpentanediol-1,5, 2-méthyl-pentanediol-1,5, 2,2-diméthylpropanediol-1,3 (néopentylglycol) et cis/trans-1,4-cyclohexanediol.

9. Système sans solvant à plusieurs composants selon l'une quelconque des revendications précédentes, l'au moins un polyol d) étant 1,4-butanediol et/ou 1,6-hexanediol.

10. Système sans solvant à plusieurs composants selon l'une quelconque des revendications précédentes, l'au moins une polyamine e) étant choisie parmi
- des amines aliphatiques, préférablement des polyalkylènepolyamines, très préférablement des polyalkylènepolyamines choisies parmi 1,2-éthylènediamine, 1,2-propylènediamine, 1,3-propylènediamine, 1,2-butylènediamine, 1,3-butylènediamine, 1,4-butylènediamine, 2-(éthylamino)éthylamine, 3-(méthylamino)propylamine, diéthylènetriamine, triéthylènetétramine, pentaéthylènehexamine, triméthylhexaméthylènediamine, 2,2,4-triméthylhexaméthylènediamine, 2,4,4-triméthylhexaméthylènediamine, 2-méthyl-pentanediamine, hexaméthylènediamine, N-(2-aminoéthyl)-1,2-éthanediamine, N-(3-aminopropyl)-1,3-propanediamine, N,N"-1,2-éthanediylbis(1,3-propanediamine), dipropylènetriamine
- des oxyalkylènepolyamines, choisies en particulier parmi polyoxypropylènediamine, polyoxypropylènetriamine, 1,13-diamino-4,7,10-trioxatridécane et 4,7-dioxadécane-1,10-diamine ;
- des amines cycloaliphatiques et (cyclo)aliphatiques, en particulier choisies parmi isophoronediamine, 4,4'-diaminodicyclohexylméthane, 2,4'-diaminodicyclohexylméthane et 2,2'-diaminodicyclohexylméthane, seuls ou en mélanges des isomères, 3,3'-diméthyl-4,4'-diaminodicyclohexylméthane, N-cyclohexyl-1,3-propanediamine, 1,2-diaminocyclohexane et 3-(cyclohexylamino)propylamine.

11. Système sans solvant à plusieurs composants selon l'une quelconque des revendications précédentes, l'au moins une polyamine e) étant une diamine choisie parmi isophoronediamine, 4,4'-diaminodicyclohexylméthane, 2,4'-diaminodicyclohexylméthane et 2,2'-diaminodicyclohexylméthane.

12. Système sans solvant à plusieurs composants selon l'une quelconque des revendications précédentes, la polyamine e) étant
a. un mélange des isomères de 4,4'-diaminodicyclohexylméthane, 2,4'-diaminodicyclohexylméthane et 2,2'-diaminodicyclohexylméthane (PACM) et/ou
b. IPD.

13. Procédé de préparation d'un système sans solvant à plusieurs composants selon l'une quelconque des revendications précédentes par
I. préparation d'un composant A) par transformation d'au moins
a. un diisocyanate aliphatique, cycloaliphatique et/ou (cyclo)aliphatique
a) ainsi que
b. au moins un isocyanurate (cyclo)aliphatique b)
en un rapport en poids de a) sur b) de 1 à 20 : 1,
c. avec 5 à 20 % en moles par rapport à la somme des groupes NCO de a) et b) d'au moins un polyol c1) comportant au moins deux groupes OH par rapport à un composant A), et
II. préparation d'un composant B) par mélange de
1. 40 à 90 % en poids d'au moins un polyol c2) comportant au moins deux groupes OH dans la molécule choisis parmi des polyesters et des polyéthers contenant des groupes hydroxyle,
2. 8 à 35 % en poids d'au moins un polyol d) comportant au moins deux groupes OH dans la molécule choisis parmi des diols comportant 2 à 14 atomes de carbone
et
3. 2 à 25 % en poids d'au moins une polyamine e) aliphatique, cycloaliphatique ou (cyclo) aliphatique.

14. Utilisation d'un système à plusieurs composants selon l'une quelconque des revendications 1 à 12 pour la préparation de cuir synthétique.

15. Procédé de préparation d'une masse durcie, dans lequel un système à plusieurs composants selon l'une quelconque des revendications 1 à 12 est donné, durci sur un substrat ou dans un moule et ensuite éventuellement retiré du substrat ou du moule.
